# EUROPEAN PATENT APPLICATION

(11) **EP 4 749 985 A1**
(43) Date of publication of application: **27.05.2026**
(21) Application number: 24214324.6
(22) Date of filing: 20.11.2024
(51) Int. Cl.: H04L 9/08

(54) **METHOD TO REVOKE A RECEIVING DEVICE AMONG A POPULATION OF RECEIVING DEVICES HAVING ACCESS TO CONDITIONAL ACCESS DATA, CORRESPONDING COMPUTER PROGRAM PRODUCTS AND DEVICES**

(71) Applicant: Nagravision Sarl, 1033 Cheseaux-sur-Lausanne (CH)
(72) Inventor: PANGAUD, Nicolas, 1033 CHESEAUX-SUR-LAUSANNE (CH)
(74) Representative: Santarelli

(57) **Abstract**

A method is proposed to revoke a receiving device among a group of receiving devices having access to conditional access data. The group is organized in a hierarchical tree structure starting by a root, represented by a root key, down to the leaves associated to the receiving devices, a leaf being represented by a key which is unique to the receiving device associated to the leaf, a path starting from the root and terminating by a leaf having multiple nodes represented by group keys. According to such method, new keys are populated only in the receiving devices using group keys representing nodes along the path starting from the root and terminating by a leaf associated to the revoked receiving device. The new root key is thus only present in the authorized receiving devices at the end. The revoked device cannot any more access to the new root key.

## Description

### Introduction

The present invention concerns the field of broadcast encryption method, i.e. a method to organize the distribution of keys into a group of users so that it is possible to manage the join, the renewal and the revocation of one member of the group in an efficient way.

### The problem

The problem considered here is how to efficiently control access to broadcast content for a large population of subscribers using only the one-way broadcast feed as a communication channel via a key-based access control only.

### Basic approach

The natural solution to this problem is to encrypt the controlled asset (e.g. TV channel) with a unique key and give this key only to those subscribers who have paid for the service.

This works fine until the subscriber decides to cancel his subscription, at which point the key must be erased from that user's terminal.

This is essentially impossible in practice since sending a Cancel message to each cancelled subscriber requires bandwidth proportional to the number of cancelled subscribers and requires a high repetition rate to have any chance of being effective, which further increases the bandwidth requirements, to the point where it becomes simply impractical.

Moreover, a dishonest user may always filter those messages or make a copy of the key and continue using it after canceling his subscription.

Thus, in order to exclude a subscriber, the key must be revoked and a new key must be used instead. This requires however to send this new key to all remaining subscribers so that those paying for the service may still have access once the key changes.

This problem has been tackled in academia under the notion of broadcast encryption. However, state-of-the art broadcast encryption schemes are inadequate for Pay TV, either because of ciphertext linearly growing with the number of revoked users, or because of the decryption keys linearly depending on the number of users in the system.

### Efficiency problems

The challenge is to find a way to send this same key-renewal message to all subscribers except those who have cancelled their subscriptions, which usually represent a small percentage of the total population.

Sending an individual message to each subscriber over the broadcast feed requires bandwidth that is proportional to the number of subscribers, which quickly represents a high bandwidth for a viable operation.

Some form of global message could be used. Such a message may contain addressing information that indicates to the receiving device whether it is a valid recipient of the message. However, the protection layer on the message is necessarily done with a secret shared by all the subscribers and thus any terminal is capable of decrypting it and retrieving the new key carried in it regardless of whether the message is addressed to it or not. This means that the terminal is ultimately trusted not to make use of the key if not entitled to, which is not acceptable since the terminal is not trusted.

### Brief description of the invention

A particular aspect of the present disclosure relates to a method to revoke a receiving device among a group of receiving devices having access to conditional access data, said group being organized in a hierarchical tree structure starting by a root, represented by a root key, down to the leaves associated to the receiving devices, a leaf being represented by a leaf key which is unique to the receiving device associated to the leaf, a path starting from the root and terminating by a leaf having multiple nodes defining an ordered sequence of nodes having a level in the sequence, a node the closest to the root being a node of lower level in the sequence, the node the closest to the leaf being the node of higher level in the sequence, each node defining a respective group of receiving devices having a hierarchical tree structure starting by the node, the node being represented by a group key. According to such method, each receiving device of the group is populated with the root key, the group keys representing the nodes pertaining to the path starting from the root down to the leaf associated to the receiving device, and a leaf key which is unique to the receiving device. For at least one receiving device to be revoked, hereafter revoked receiving device, the method comprises a revocation phase comprising:
- sending, to the receiving devices, at least one first cryptogram comprising a first new group key associated to a node of highest level along the path starting from the root and terminating by a leaf associated to the revoked receiving device, hereafter revoked path, the at least one first cryptogram being encrypted by a respective leaf key of a receiving device member of a first group the revoked receiving device is member of, the first group being defined by the node of highest level along the revoked path; and
- sending, to the receiving devices, a plurality of second cryptograms comprising a first new group key associated to another node of another level along the revoked path different than the node of highest level, each second cryptogram being encrypted by a first new group key representing a node of level following the other level in the sequences of nodes of a path starting from the root down to a leaf associated to a receiving devices member of a second group the revoked receiving device is member of, the second group being defined by the other node, said sending a plurality of second cryptograms being repeated to cover all nodes along the revoked path starting from the node of highest level along the revoked path up to the root.

Thus, the present disclosure proposes a new and inventive solution for revoking a receiving device part of a group of receiving devices (e.g. a smartphone, a set top box (STB), a computer, a TV receiving device (e.g. an HbbTV), ...) having access to conditional access data (e.g. video or audio contents as delivered through a pay service (e.g. a pay-tv operator)).

More particularly, only the receiving devices using group keys representing nodes along the revoked path are updated, these group keys being used to access the root key. This ensures that a new root key (or root data) is only present in the authorized receiving devices at the end. The revoked device cannot any more access to the new root key. This approach minimizes the number of cryptograms to be sent in the broadcast system for revoking the revoked device. Such cryptograms can be sent to the receiving devices whether through a single message (e.g. a broadcast message) or through a plurality of such messages.

In some embodiments, the at least one first cryptogram does not comprise a first cryptogram encrypted by a leaf key of the revoked receiving device.

In some embodiments, the plurality of second cryptograms does not comprise a second cryptogram encrypted by the first new group key representing a node of level following the other level in the sequences of nodes of the revoked path.

Thus, the revoked receiving device cannot access the new group keys, and thus the new root key at the end.

In some embodiments, the nodes of same level in the different paths starting by the root down to the leaves associated to the different receiving devices are indexed, the leaves having a leaf level following the higher level in the respective sequence, the leaves of same leaf level being indexed. The group keys are populated in the receiving devices in association with both the level of the node they represent and their index, the leaves keys being populated in the receiving devices in association with both the leaf level and the index of the leaves they represent. Each second cryptogram is encapsulated in a block of data further comprising both the level of the node represented by the first new group key used to encrypt the second cryptogram, and the index of the first new group key used to encrypt the second cryptogram, the at least one first cryptogram being encapsulated in a block of data further comprising both the leaf level and the index of the leaf key used to encrypt the first cryptogram.

Thus, the receiving device has directly the knowledge of the new group key to be used for deciphering the received second cryptogram.

In some embodiments, the group keys are populated in the receiving devices in association with the levels of the nodes they represent. The leaves having a leaf level following the higher level in the respective sequence, the leaves keys are populated in the receiving devices in association with the leaf level of the leaves they represent. Each second cryptogram is encapsulated in a block of data further comprising the level of the node represented by the first new group key used to encrypt the second cryptogram, the at least one first cryptogram being encapsulated in a block of data further comprising the leaf level of the leaf key used to encrypt the first cryptogram. In some of those embodiments, no indexes are populated in the receiving devices in association with the levels of the nodes the group keys represent or in association with the leaf level of the leaves the leaves keys represent.

For instance, the receiving device has the knowledge of only the level of the node the new group key to be used for deciphering the received second cryptogram represents. It means that different receiving devices having such new group key will try to decipher the received second cryptogram using their group key representing a node having the indicated level.

In some of the embodiments wherein the group keys are populated in the receiving devices in association with the levels of the nodes they represent, the leaves keys being populated in the receiving devices in association with the leaf level of the leaves they represent, each cryptogram comprises a control value of the first new group key.

Thus, even when no index is provided in the respective key block, the receiving device can know if the first new group key carried by the cryptogram is intended for it by comparison of the control value with a predetermined expected value.

In some embodiments, the control value of the first new key belongs to the group comprising:
- a constant value associated to the first new group key; and
- a result of a cyclic redundancy check scheme applied to the first new group key.

In some embodiments, the second cryptograms comprising a new root key also comprise an information representative of which root key to update among different root keys populated in the receiving devices.

In some embodiments, the second cryptograms comprise at least one second cryptogram comprising a second new group key different than the first new group key, the second cryptogram being encrypted by a second new group key representing a node of level following the other level in the sequences of nodes of the revoked path. In some of those embodiments, the at least one first cryptogram comprises a first cryptogram comprising a second new group key different than the first new group key, the first cryptogram being encrypted by the leaf key of the revoked receiving device.

Thus, the revoked receiving device is populated with second new group keys different than the first new group keys. The result is that the revoked receiving device is now on a dedicated new branch of the hierarchical tree, e.g. excluded from the original hierarchical tree. Having that the same mechanism is used whether for the simple update of the key in the context of revocation, or for pushing the revoked receiving device on a dedicated new branch of the hierarchical tree, further makes the proposed solution hard to detect and understand for a hacker. This strengthens the resilience of the solution in respect of hackers.

In some of those embodiments wherein at least one second cryptogram comprises a second new group key different than the first new group key, at least one of the second cryptograms comprises data that has not been encrypted using one of the first new group keys or the second new group key.

Thus, fake second cryptograms are broadcasted, e.g. for having the revoked receiving device to see a same number of second cryptogram as if it was a normal group key update that takes place whereas a pushing the revoked receiving device on a dedicated new branch of the hierarchical tree occurs. This further makes the proposed solution hard to detect and understand for a hacker. This strengthens the resilience of the solution in respect of hackers.

In some embodiments, the method comprises a population phase comprising, for each receiving device of the group:
- sending, to the receiving device, at least one initializing message comprising the root key, the group keys representing the nodes pertaining to the path starting from the root down to the leaf associated to the receiving device, and the leaf key which is unique to the receiving device.

Another aspect of the present disclosure relates to a method to revoke a receiving device among a group of receiving devices having access to conditional access data, said group being organized in a hierarchical tree structure starting by a root, represented by a root key, down to the leaves associated to the receiving devices, a leaf being represented by a leaf key which is unique to the receiving device associated to the leaf, a path starting from the root and terminating by a leaf having multiple nodes defining an ordered sequence of nodes having a level in the sequence, a node the closest to the root being a node of lower level in the sequence, the node the closest to the leaf being the node of higher level in the sequence, each node defining a respective group of receiving devices having a hierarchical tree structure starting by the node, the node being represented by a group key. According to such method, each receiving device of the group is populated with the root key, the group keys representing the nodes pertaining to the path starting from the root down to the leaf associated to the receiving device, and a leaf key which is unique to the receiving device. For at least one receiving device to be revoked, hereafter revoked receiving device, the method comprises a revocation phase comprising:
- receiving, by a receiving device, at least one first cryptogram comprising a first new group key associated to a node of highest level along the path starting from the root and terminating by a leaf associated to the revoked receiving device, hereafter revoked path, the at least one first cryptogram being encrypted by a respective leaf key of a receiving device member of a first group the revoked receiving device is member of, the first group being defined by the node of highest level along the revoked path; and
- receiving, by the receiving device, a plurality of second cryptograms comprising a first new group key associated to another node of another level along the revoked path different than the node of highest level, each second cryptogram being encrypted by a first new group key representing a node of level following the other level in the sequences of nodes of a path starting from the root down to a leaf associated to a receiving devices member of a second group the revoked receiving device is member of, the second group being defined by the other node, said receiving a plurality of second cryptograms being repeated to cover all nodes along the revoked path starting from the node of highest level along the revoked path up to the root.

In some embodiments, the revocation phase further comprises obtaining:
- the first new group key associated to the node of highest level along the revoked path by deciphering a first cryptogram using the leaf key of the receiving device; and/or
- at least one first new group key associated to another node of another level along the revoked path different than the node of highest level by deciphering a second cryptogram using the first new group key representing a node of level following the other level in the sequences of nodes of the path starting from the root down to a leaf associated to the receiving device.

In some embodiments, the method further comprises an accession phase comprising, for at least one receiving device of the group:
- using the root key to directly or indirectly access to the conditional access data.

In some embodiments, the nodes of same level in the different paths starting by the root down to the leaves associated to the different receiving devices are indexed, the leaves having a leaf level following the higher level in the respective sequence, the leaves of same leaf level being indexed. The group keys are populated in the receiving devices in association with both the level of the node they represent and their index, the leaves keys being populated in the receiving devices in association with both the leaf level and the index of the leaves they represent. Each second cryptogram is encapsulated in a block of data further comprising both the level of the node represented by the first new group key used to encrypt the second cryptogram, and the index of the first new group key used to encrypt the second cryptogram, the at least one first cryptogram being encapsulated in a block of data further comprising both the leaf level and the index of the leaf key used to encrypt the first cryptogram.

In some embodiments, the group keys are populated in the receiving devices in association with the levels of the nodes they represent. The leaves having a leaf level following the higher level in the respective sequence, the leaves keys are populated in the receiving devices in association with the leaf level of the leaves they represent. Each second cryptogram is encapsulated in a block of data further comprising the level of the node represented by the first group key used to encrypt the second cryptogram, the at least one first cryptogram being encapsulated in a block of data further comprising the leaf level of the leaf key used to encrypt the first cryptogram. In some of those embodiments, no indexes are populated in the receiving devices in association with the levels of the nodes the group keys represent or in association with the leaf level of the leaves the leaves keys represent.

In some of the embodiments wherein the group keys are populated in the receiving devices in association with the levels of the nodes they represent, each cryptogram comprises a control value of the first new group key. The step of obtaining further comprises, for at least one first new group key, obtaining the control value of the first new group key. The step of obtaining further comprises comparing the obtained control value with a respective predetermined expected value.

In some embodiments, the control value of the first new key belongs to the group comprising:
- a constant value associated to the first new group key; and
- a result of a cyclic redundancy check scheme applied to the first new group key.

In some embodiments, the second cryptograms comprising a new root key also comprise an information representative of which root key to update among different root keys populated in the receiving devices.

In some embodiments, the second cryptograms comprise at least one second cryptogram comprising a second new group key different than the first new group key, the second cryptogram being encrypted by a second new group key representing a node of level following the other level in the sequences of nodes of the revoked path. In some of those embodiments, the at least one first cryptogram comprises a first cryptogram comprising a second new group key different than the first new group key, the first cryptogram being encrypted by the leaf key of the revoked receiving device.

In some of those embodiments wherein at least one second cryptogram comprises a second new group key different than the first new group key, at least one of the second cryptograms comprises data that has not been encrypted using one of the first new group keys or the second new group key.

In some embodiments, the method comprises a population phase comprising, for each receiving device of the group:
- receiving at least one initializing message comprising the root key, the group keys representing the nodes pertaining to the path starting from the root down to the leaf associated to the receiving device, and the leaf key which is unique to the receiving device.

Another aspect of the present disclosure relates to a computer program product comprising program code instructions for implementing the above-mentioned method to revoke a receiving device (in any of the different embodiments discussed above), when the program is executed on a computer or a processor.

Another aspect of the present disclosure relates to an electronic device comprising at least one processor or at least one field-programmable gate array or at least one dedicated computing machine configured for executing all or part of the steps of the above-mentioned method to revoke a receiving device (in any of the different embodiments discussed above). Thus, the features and advantages of this device are the same as those of the corresponding steps of said method. Therefore, they are not detailed any further.

Another aspect of the present disclosure relates to a method to revoke a receiving device among a group of receiving devices having access to conditional access data, said receiving device comprising a memory for storing a set of keys, these keys being organized in a hierarchical sequence of levels, the lower key level representing a root key, shared by all receiving devices, and the higher key level representing a leaf key, unique for said receiving device, the intermediate key levels representing group keys shared by more than one receiving device. Each receiving device of the group is populated with the root key, the group keys representing the nodes pertaining to a path starting from the root down to the leaf associated to the receiving device. For at least one receiving device to be revoked, hereafter revoked receiving device, such method comprises a revocation phase comprising:
- sending, to the receiving devices, at least one cryptogram per level, each cryptogram comprising, for a current level, a new group key for replacing the current group key which was stored in the revoked receiving device, the new group key being encrypted by the group key or leaf key of the level above the current level; and
- sending, to the receiving devices, a cryptogram comprising a new root key, said new root key being encrypted by the group key of the level above the root key level.

The gist of the invention is to ensure that a root key (or root data) is only present in the authorized receiving devices. When at least one receiving device is removed for the list of authorized receiving devices, the root key is changed. This change should be made by a limited number of cryptograms (and thus of key blocks and messages) in order to reduce the bandwidth used for the removal.

### Brief description of the figures

The present application will be better understood thanks to the attached figures, in which:
- Figure 1 illustrates a broadcast encryption hierarchical tree according to an embodiment of the invention;
- Figure 2 illustrates the keys stored in the receiving device R3 to be revoked according to an embodiment of the invention;
- Figure 3 illustrates the keys to be updated in the hierarchical tree for revoking the receiving device R3 according to an embodiment of the invention;
- Figure 4 illustrates the revocation of the receiving device R3 by moving it to another branch of the hierarchical tree according to an embodiment of the invention;
- Figure 5 illustrates a flowchart of a method to revoke a receiving device according to one embodiment of the present disclosure;
- Figure 6 illustrates an example of the structural blocks of a first electronic device allowing steps of the method of figure 5 to be executed by the management center of figure 1 according to one embodiment of the present disclosure; and
- Figure 7 illustrates an example of the structural blocks of a second electronic device allowing steps of the method of figure 5 to be executed by a receiving device of figure 1 according to one embodiment of the present disclosure.

### Detailed description

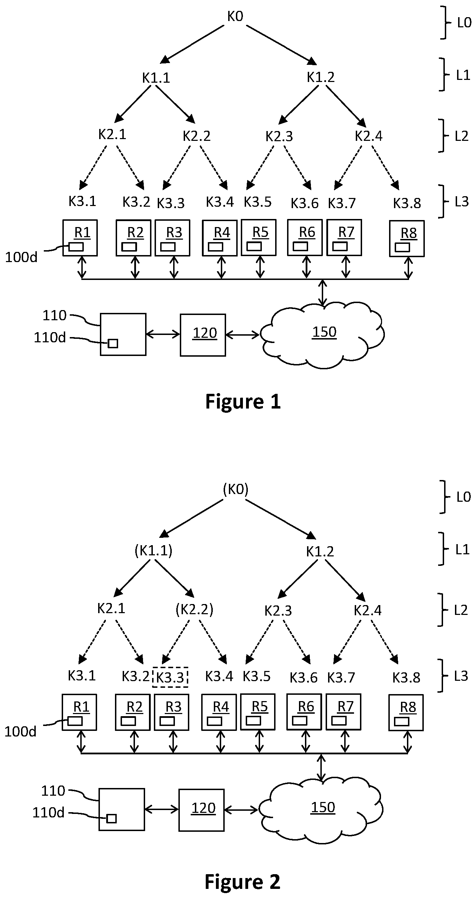

The organization of the receiving devices (or receivers) is a hierarchical tree structure starting by a root, represented by a root key K0, down to the leaves associated to the receiving devices R1-R8 as illustrated in the **figure 1****.**

More particularly, a path starting from the root and terminating by a leaf has multiple nodes defining an ordered sequence of nodes indexed by levels L1, L2. The node the closest to the root is the node of lower level L1 in the sequence. The node the closest to the leaf is the node of higher level L2 in the sequence. The leaf level L3 refers to the leaves represented each by a key, named leaf key, and associated to a receiving device R1-R8. The level L0 refers to the root key K0. The root key K0 is used to control the access to the media content for the receiving devices R1-R8 (e.g. a set top box, a TV receiving device (e.g. an HbbTV)). Various ways are available to force the receiving devices R1-R8 to use the root key K0 for accessing the content (e.g. a video or audio content). According to a first example, the root key K0 is used to encrypt the renewal messages comprising the next transmission key. This transmission key is used to encrypt the control messages comprising the control words used to decrypt the media content. The control word is the key loaded into a descrambler to descramble the received encrypted media packet to obtain the media content. The transmission key is renewed regularly (for example once per month) and the receiving devices not having the valid root key K0 will not be able to obtain the valid transmission key. Expiration time tag is associated with the transmission key and a receiving device can store the current and the next transmission key. The absence of the new transmission key will therefore have no impact on the reception of the media content as long as the new transmission is not used. At the expiration of the current transmission key, the revoked receiving device will not be able to continue to access the media content since the new transmission key was not accessible by this receiving device.

According to another example, the root key K0 is the transmission key.

According to another example, the root key K0 is used as a further encryption level on the control words. The message (Entitlement Control Message ECM) sent along the encrypted media content, is encrypted by the transmission key and comprise at least the current control word CW1 and the next control word CW2. Other information such as the right needed to access the content can be optionally added in the message. Once the message is decrypted, the control words are further decrypted by the root key K0 before being applied to the descrambler.

According to one embodiment, the root key K0 further comprises an index and the receiving device preferably has a storage place for at least two root keys K0. Once a message using the root key K0 is received by the receiving device, the message further comprises an indication of which root key K0 should be used. In this manner, the revoked receiving device, which has not received the new root key K0, can still works as long as the current root key K0 is used by the transmission system. The management center 110 can then decide to enforce the new root key K0 at a strategic time (for example just before a major sport event).

In a similar manner, the receiving device has a storage place for two root keys K0, each root key K0 being associated with an expiration time. The receiving device should change for the new root key K0 as soon as the expiation time of the current root key K0 is reached.

As a consequence, the root key K0 controls the access to the media content.

The hierarchical tree comprises n levels (e.g. n=4 with levels L0, L1, L2 and L3 in the figures) divided in groups. The level n is the leaf level where only one receiving device is associated. The leaf key associated with the leaf level n is a unique key for one receiving device. The level n-1 refers to a respective group comprising several receiving devices sharing a node key which is common of all receiving devices belonging to the respective group. It is to be noted that the example of two receiving devices (or two groups of receiving devices) is due to the binary structure of the hierarchical tree structure considered in the figures. This is an example only. A node can define a group comprising more than two receiving devices or groups of receiving devices depending on the chosen hierarchical tree structure.

Back to figure 1, the different keys are managed by the management center 110 that provides the keys through packages to the content provider system 120 that provides contents to the receiving devices R1-R8, e.g. through a broadcast service. For this, the content provider system 120 is communicatively connected to the receiving devices R1-R8 through the broadcast communications network 160 which is a unidirectional communications network.

The term "broadcast" is not limited to over-the-air transmission but describes the fact that the receiving device is not communicatively connected with the management center through a bi-directional network protocol and all receiving devices have access to the same content. The transmission of the media content can be satellite, terrestrial antenna or even internet connection. In this latest case, the receiving device, as far as the media content is concerned, has no bi-directional connection with the management center.

In some embodiments, the management center 110 and the content provider system 120 are a same system.

At the initialization stage, the authorized receiving device will be loaded with n keys, the nth key is the leaf key of the receiving device, and then with the node key of each node along a path in the hierarchical tree starting from the root down to the level n-1.

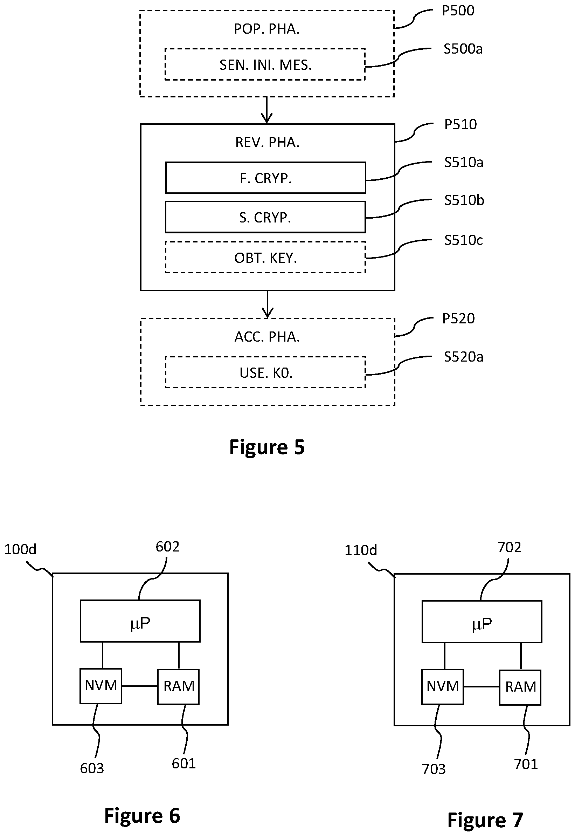

The loading of the set of keys can be made during a population phase or during an initialization of the receiving devices , while the receiving device is in the hand of the service provider, or in the customer premises over-the-air as discussed below in relation with figure 5. The management center 110 can prepare and send a key initializing message comprising the n keys for a dedicated receiving device.

The management center 110 stores the leaf key of each receiving device as well as each node key. Each key is e.g. associated with a label to define the position of the key into the tree. The example of the figure 1 illustrates a tree with four level and each node is identified with a node key labelled according to the level and the position in the group. The leaf level L3 is the level of the receiving device and of the leaf key. The key K3.1 is a leaf key for the receiving device R1 and in the same manner, the keys K3.2, K3.3, K3.4, K3.5, K3.6, K3.7 and K3.8 are the leaf keys for the receiving devices R2 to R8 respectively.

After the successful initialization of the receiving device, for example the receiving device R3, the latter will comprise the leaf key K3.3, the node key K2.2, the node key K1.1 and the root key K0. In a preferred mode, the keys are stored in a memory of the receiving device with the associated label e.g. as illustrated in Table 1 below:

**Table 1**

| Label | Key |
|---|---|
| L0 | K0 |
| L1.1 | K1.1 |
| L2.2 | K2.2 |
| L3.3 | K3.3 |

In normal operation, the root key K0 can be renewed by the transmission of two key update messages, one comprising the new root key K0', encrypted by the first node key of the level L1 (K1.1) and other key update message comprising the new root key K0', encrypted by the second node key of the level L1 (K1.2). It is to be noted that one key update message can comprise the two cryptograms (K0')_{K1.1} and (K0')_{K1.2}, each cryptogram comprising a label defining which key is in the cryptogram. The receiving devices while receiving the key update message, can check which key is stored in their memory and use the proper key to decrypt the one or the other cryptogram to renew the root key K0.

We now take the example of removing the receiving device R3 from the access to the media content. The aim is then to change the root key K0 with a new key and avoiding that the receiving device R3 can have access to the new root key K0'.

The **figure 2** illustrates the compromises keys, i.e. all keys that are present in the receiving device to be revoked. In the present example, the receiving device R3 has to be revoked and the compromised keys populated in the receiving device R3 are the node key K2.2, the node key K1.1 and the root key K0, depicted in parenthesis in figure 2. All these keys should be changed and updated in the non-revoked receiving devices having one or more of these keys.

In order to minimize the amount of data sent to the receiving devices, only the keys along the same path as the revoked receiving device will be updated. In the example of the figure 2, it is the node key K2.2, the node key K1.1 and the root key K0. The management center 110 accordingly generates new keys to update the revoked keys and store these new keys in its key storage, each key being associated with a label defining the position of the key in the tree.

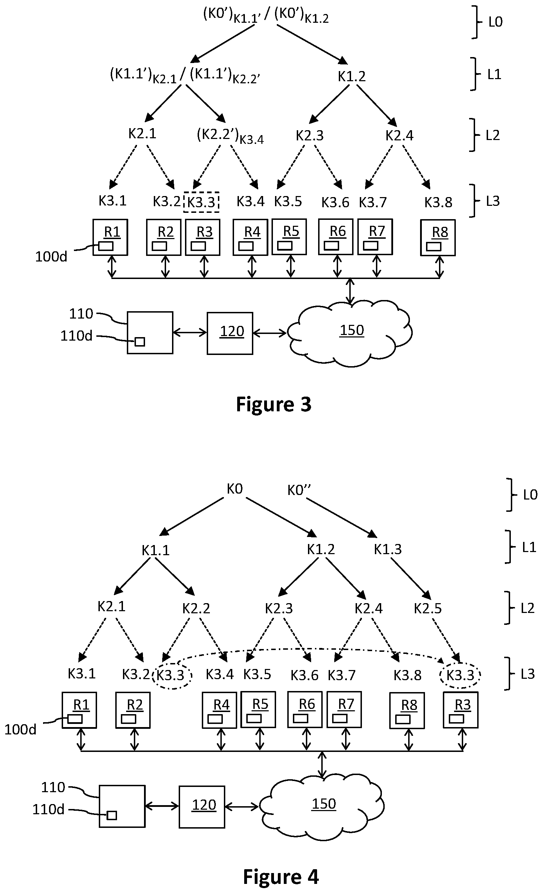

As illustrated in **figure 3****,** the management center 110 prepares five blocks of data, hereafter key blocks:
L3.4 (K2.2')_{K3.4} ; L2.2 (K1.1')_{K2.2'} ; L2.1 (K1.1')_{K2.1} ; L1.1 (K0')_{K1.1'} ; L1.2 (K0')_{K1.2}

In which L3.4, L2.2, L1.1, L1.2 define the label of the key to be used, and K2.2', K1.1' and K0' are the new keys encrypted by a key from a lower level. Each key block thus comprises a cryptogram (i.e. a new key encrypted by a key from a lower level) and the label of the key to be used to decrypt the cryptogram.

Those five key blocks are encapsulated in one (or more) message(s) (e.g. broadcast message(s)) and sent to the receiving devices. Such message will be accessible to all receiving devices. Each receiving device checks one block at a time to define if it is impacted by the change. The first key block having label of a leaf key, only the receiving device R4 can process it. The receiving device R4, once the message is received detects that its label of the level 4 matches the label of the key change and decrypts the cryptogram to obtain the new K2.2'.

The next key block is processed by the receiving devices and only those having the label L2.2 will be impacted. The receiving device R4 having the label L2.2 and the new key K2.2' can decrypt the second cryptogram and obtain the new key K1.1'. In the same manner, the fourth key block is processed by the receiving device R4 (having the label L1.1) and the new root key K0' is then loaded. The receiving device R4 is fully updated.

For the receiving device R1, the two first key blocks are not relevant and only the key block related to the level L2.1 is to be processed. With the key K2.1, the receiving device R1 (as well as R2) can update the key K1.1'. The final processing of the fourth key block by these two receiving devices allow them to update the root key K0'.

The receiving devices R5 to R8 will process only the fifth key block (level L1.2) in order to update the root key K0'.

The above-mentioned key blocks can be part of a single message sent to the receiving devices. Alternatively, the above-mentioned key blocks can be part of different messages sent (e.g. broadcast) to the receiving devices.

The number of key blocks is linked with the number of levels. In an example with 24 levels and two branches per node, thus being able to cover more than 16 million of receiving devices, only 49 key blocks are necessary to revoke a receiving device and update the others.

According to one embodiment, the receiving device has no indication about the node index. Only the keys are stored in an organized manner, for example 24 keys in a table format (for the example with 24 levels), starting with the root key and ending with the leaf key of the receiving device.

In case example of 4 levels as illustrated in the figures, for the revocation of the receiving device R3, the management center 110 prepares five key blocks:
L3 (K2.2',PD1)_{K3.4} ; L2 (K1.1',PD2)_{K2.2'} ; L2 (K1.1',PD3)_{K2.1} ; L1 (K0',PD4)_{K1.1'} ; L1 (K0',PD5)_{K1.2}

Those key blocks allow updating the keys K0, K1.1 and K2.2 by the new keys K0', K1.1' and K2.2' for the concerned receiving devices of the group, except the receiving device R3 to be revoked.

More particularly, a given key block comprises only an indication of which level is concerned without indicating the position in the tree. The newly generated key, for example K2.2' is associated with a control value PD1 which can be a control value of the key (such as CRC) or constant value (such as 10101010). The concatenation of the key and the control value is then encrypted in a cryptogram by the key corresponding to the indicated level and to the position of a receiving device to be updated in the tree (e.g. the new key K2.2' is encrypted by the key K3.4 for updating the receiving device R4). A receiving device receiving a message with the key block will use the corresponding key of the indicated level to decrypt the cryptogram and check if the result is a valid key. For the receiving device R4, the decryption of the level 3 is used (K3.4) on the cryptogram and the resulting data produces K2.2', PD1. In order to determine if the result is valid for this receiving device, a check on the validity of the key is to be performed.

In the case of a control value being a signature of the key (e.g. a CRC), the receiving device calculates the CRC of the key and compare it with the received control value PD1 (PD1 = CRC(K2.2') ?). In the case of the control value being a constant value, the receiving device R3 compares the control value PD1 with the expected value (PD1 = 10101010 ?). In the positive event, the received key K2.2' is validated and updated in the key list of the receiving device at the level L3-1, i.e. L2.

The other receiving devices will carry out the same verification. For the receiving device R2, the decryption of the cryptogram with the key K3.2 will result of two data D1, D2 since the key K3.2 was not the one used for the encryption. The receiving device R2 checks the validity of the first data D1 with the data D2 (same mechanism as described above) and arrives to the conclusion that D1 is not a valid key. This cryptogram is discarded.

Each cryptogram is processed by the receiving devices and as soon as the decrypted result leads to a valid key, the key of the level above is updated. The same receiving device R2, once the third cryptogram is decrypted by the key K2.1, will obtain the new key K1.1' and the control value PD3. The verification of the validity of the key is then confirmed and the receiving device will update its key of the level L1 with the new K1.1'.

In a particular embodiment, the receiving device can store more than one root key K0, K0', i.e. the root key index 0 and the root key index 1 as illustrated in Table 2 below:

**Table 2**

| Level | Key | |
|---|---|---|
| 0 | K0 (Index0) | K0' (Index1) |
| 1 | K1.1 | |
| 2 | K2.2 | |
| 3 | K3.3 | |

The cryptogram prepared and sent by the management center 110 further comprises an indication of which root key K0, K0' is updated.

In respect to the example above, the memory of the receiving device R3 is organized with one location per level and two locations for two root keys. As explained above, the cryptogram comprising the encrypted root key further comprises the index of the root key. In this manner, the receiving device can store and manage two root keys.

Back to the example of the root key being used to encrypt the control words (CW), the message carrying the encrypted control words further comprises an indication of which index for the root key to be used. In order to avoid a black screen all receiving devices should update the root key first before said root key can be used. This is why the message comprising the new root key is transmitted multiple time in the transmission system to ensure that all receiving devices have the time and opportunity to receive and store the new root key. According to one example, the new root key K0' is changed a week or 10 days before the new root key is used. The management center 110 then transmits the key update message regularly in order to allow each receiving device to receive, process and update the keys. During this time, the ECM will indicate the index0 for the root key to be used so that all receiving devices, even if not updated, can still descramble the media content. During this period, the receiving devices can receive and process the key update messages and, if allowed, update and store the new root key K0'.

The root key can be changed in the frame of the revocation of a receiving device or simply to update the root key. In the first example, the change of the root key is accompanied with the change of all keys along the path in the hierarchical tree from the revoked receiving device (for example R3) until the root level. In absence of revocation, it is possible to renew the root key by preparing two cryptograms, each being the encrypted new key by the key of the level below.

The example of the figure 1 and 2, the corresponding key blocks will be as follows:
L1 (K0',PD4)_{K1.1} ; L1 (K0',PD5)_{K1.2}

According to the embodiment of **figure 4****,** the revoked decoder R3 is moved to another branch of the hierarchical tree. In this manner, the revoked decoder R3 still believes that everything is ok even after the key update. For that purpose, a fake root key is generated K0" and all keys along the path from the leaf key to the root key are updated. The message for the revoked receiving device R3 will look like a normal revocation message for another receiving device.

The management center 110 prepares five key blocks:
L3 (K2.5,PD1)_{K3.3} ; L2 (K1.3,PD2)_{K2.5} ; L2 (dummy) ; L1 (K0",PD4)_{K1.3} ; L1 (dummy)

In order to hide this operation to the revoked receiving device R5, the number of key blocks is preferably the same. Dummy data replace the encrypted node key so that no receiving device will consider these data as key update.

The consequence is the update of the root key K0" in the revoked decoder R3. The key update cryptogram can further comprise the index (index 1) of the root key so that the revoked decoder R3 keeps the current root key K0 (index 0) and the new root key K0" (index 1).

In order to update the root key into the other receiving devices, we can take advantage of the previous key blocks and update the root key for a part of receiving devices.

For instance, the management center 110 prepares five key blocks:
L3 (K2.5,PD1)_{K3.3} ; L2 (K1.3,PD2)_{K2.5} ; L2 (dummy) ; L1 (K0",PD4)_{K1.3} ; L1 (K0',PD5)_{K1.1}

The receiving devices having the node key K1.1 will update the root key for the new root key K0' while moving the revoked receiving device R3 to the new branch.

After the processing of those key blocks, one (or more) further revocation key block(s) should be prepared and transmitted:
L3 (dummy) ; L2 (dummy) ; L2 (dummy) ; L1 (K0',PD4)_{K1.2} ; L1 (K0‴,PD5)_{K1.3}

The receiving devices having the node key K12 will update the root key for the new root key K0'.

The revoked receiving device R3 is expecting to process successfully at least one cryptogram. This is why the root key for this revoked receiving device R3 is changed twice.

Back to the example of the over encryption of the control word with the root key, the management center 110 can change the index in the ECM to activate the use of the new root key. The revoked decoder R3 will be the only one with the new key K0" or K0‴ (the other one will have the new root key K0') and therefore not be able to access the media content.

In a preferred embodiment, the list of keys is stored in a secure manner inside the receiving device. Obfuscation methods are used to hide the content of the keys.

Referring now to **figure 5****,** we describe a method to revoke a receiving device according to one embodiment of the present disclosure.

More particularly, the receiving device to be revoked (e.g. the receiving device R3 in the figures 1 to 4), named revoked receiving device in the sequel, is part of a group of receiving devices having access to conditional access data. Such group is organized in a hierarchical tree structure (e.g. a binary structure as illustrated in the embodiments of figures 1 to 4) starting by a root, represented by a root key K0, down to the leaves associated to the receiving devices R1-R8, a leaf being represented by a leaf key which is unique to the receiving device associated to the leaf. A path starting from the root and terminating by a leaf has multiple nodes defining an ordered sequence of nodes having a level in the sequence. The node the closest to the root is the node of lower level in the sequence, the node the closest to the leaf being the node of higher level in the sequence, each node defining a respective group of receiving devices having a hierarchical tree structure starting by the node, the node being represented by a group key.

During a **population phase P500,** the management center 110 executes a **step S500a** wherein one (or more) initializing message is sent (directly or indirectly, e.g. when going through the content provider system 120), to each receiving device. For a given receiving device, such initializing message(s) comprise(s) the root key, the group keys representing the nodes pertaining to the path starting from the root down to the leaf associated to the receiving device, and the leaf key which is unique to the receiving device. Conversely, in step S500, each receiving device receives and stores the respective keys.

In some embodiments, the initializing message(s) also comprises the level of the node represented by the group key and the index of the group key. In some of those embodiments, the initializing message(s) also comprises the leaf level and the index of the leaf the leaf key represent (see embodiments discussed above in relation with Figures 1-4, e.g. the example of Table 1). In some embodiments, the initializing message does not comprise such index of the group key, but only the level of the node represented by the group key.

In some embodiments, the management center 110 does not execute the step S500a, e.g. when the keys are already stored in a memory of the receiving devices. For instance, the keys are stored in a memory of the receiving devices during an initialization of the receiving devices (e.g. during a key ceremony or during a configuration of the receiving devices during manufacturing or while the receiving devices are in the hand of the service provider).

In some embodiments, the keys are stored in a memory of the receiving devices through a combination of:
- an initialization of the receiving devices for storing part of the keys; and
- the reception of the other part of the keys e.g. through initializing message(s) sent by the management center 110 during step S500a.

For instance, during the initialization of a receiving device, the leaf key which is unique to the receiving device is stored in a memory of said receiving device (e.g. in association with a unique ID of the receiving device). At a later stage, initializing message(s) sent by the management center 110 during step S500a comprise(s) the other keys of the hierarchical tree that belong to said receiving device (e.g. the root key and the group keys representing the nodes pertaining to the path starting from the root down to the leaf associated to said receiving device).

Indeed, it may be necessary for the on-line upload (step S500a), that at least the leaf key is present in the respective receiving device, to secure the upload of the other keys. Conversely, it is unlikely that the root key can be stored in a memory of the receiving device during an initialization of the receiving device. Indeed, the root key changes often and the risk that an old root key is not able to enable the content access is high.

Back to figure 5, during a **revocation phase P510,** the management center 110 executes a **step S510a** wherein the management center 110 sends (directly or indirectly, e.g. e.g. when going through the content provider system 120), to the receiving devices (e.g. in a broadcast way), at least one first cryptogram comprising a first new group key associated to a node of highest level along the path starting from the root and terminating by a leaf associated to the revoked receiving device, hereafter revoked path. Such first cryptogram is encrypted by a respective leaf key of a receiving device member of a first group the revoked receiving device is member of, the first group being defined by the node of highest level along the revoked path. For instance, the number of first new group key is equal to the number of receiving devices that are different from the revoked receiving device and that are part of the first group.

Back to figure 5, during the revocation phase P510, the management center 110 further executes a **step S510b** wherein the management center 110 sends (directly or indirectly, e.g. through the content provider system 120), to the receiving devices (e.g. in a broadcast way), a plurality of second cryptograms comprising a first new group key associated to another node of another level along the revoked path different than the node of highest level, each second cryptogram being encrypted by a first new group key representing a node of level following the other level in the sequences of nodes of a path starting from the root down to a leaf associated to a receiving devices member of a second group the revoked receiving device is member of, the second group being defined by the other node. Said sending a plurality of second cryptograms is repeated to cover all nodes along the revoked path starting from the node of highest level along the revoked path up to the root. For a given other node, the number of first new group key is equal to the number of different paths starting from said given other node in the hierarchical tree structure.

For instance, there is no first cryptogram encrypted by a unique leaf key of the revoked receiving device. In the same way, there is no second cryptogram encrypted by the first new group key representing a node of level following the other level in the sequences of nodes of the revoked path.

Thus, only the receiving devices using group keys representing nodes along the revoked path are updated, these group keys being used to access the root key. This ensures that a new root key (or root data) is only present in the authorized receiving devices at the end. The revoked device cannot any more access to the new root key. This approach minimizes the number of messages to be sent in the broadcast system for revoking the revoked device.

In some embodiments, the first cryptogram(s) and the second cryptograms are encapsulated and sent (e.g. broadcast) to the receiving devices in a same message. Alternatively, in some embodiments, the first cryptogram(s) and the second cryptograms are encapsulated and sent in different messages, e.g. one cryptogram per message, or the first cryptogram(s) in one message and the second cryptograms in another message, etc.

In some embodiments, the at least one revoked receiving device comprises a memory for storing a set of keys, these keys being organized in a hierarchical sequence of levels, the lower key level representing a root key, shared by all receiving devices, and the higher key level representing a leaf key, unique for said receiving device, the intermediate key levels representing group keys shared by more than one receiving device. Each receiving device of the group is populated with the root key, the group keys representing the nodes pertaining to a path starting from the root down to the leaf associated to the receiving device. The revocation phase comprises:
- sending, to the receiving devices, at least one cryptogram per level (see steps S510a and S510b above with the first and second cryptograms), each cryptogram comprising, for a current level, a new group key for replacing the current group key which was stored in the revoked receiving device, the new group key being encrypted by the group key or leaf key of the level above the current level; and
- sending, to the receiving devices, a cryptogram (see step S510b above with the second cryptograms) comprising a new root key, said new root key being encrypted by the group key of the level above the root key level.

Back to figure 5, during the revocation phase P510, a receiving device having received the one (or more) first cryptogram and the second cryptograms executes a **step S510c** wherein the receiving device obtains the corresponding keys. More particularly, the receiving device obtains:
- the first new group key associated to the node of highest level along the revoked path by deciphering a first cryptogram using the leaf key of the receiving device; and/or
- at least one first new group key associated to another node of another level along the revoked path different than the node of highest level by deciphering a second cryptogram using the first new group key representing a node of level following the other level (or in other words: the node of level above the other level) in the sequence of nodes of the path starting from the root down to a leaf associated to the receiving device.

In some embodiments, the nodes of same level in the different paths starting by the root down to the leaves associated to the different receiving devices are indexed. The leaves have a leaf level following the higher level in the respective sequence, the leaves of same leaf level being indexed (see embodiments discussed above in relation with Figures 1-4, e.g. the example of Table 1). In such embodiments, the group keys are populated in the receiving devices in association with both the level of the node they represent and their index. The leaves keys are populated in the receiving devices in association with both the leaf level and the index of the leaves they represent. Each second cryptogram is encapsulated in a respective key block further comprising both the level of the node represented by the first new group key used to encrypt the second cryptogram, and the index of the first new group key used to encrypt the second cryptogram. In some of those embodiments, the one (or more) first cryptogram is encapsulated in a key block further comprising both the leaf level and the index of the leaf key used to encrypt the first cryptogram. Accordingly, a receiving device receiving such key block has directly the knowledge of the new group key to be used during step S510c for deciphering the received respective second cryptogram.

Conversely, in some embodiments, the nodes group keys are populated in the receiving devices in association with the levels of the nodes they represent. The leaves keys are populated in the receiving devices in association with the leaf level of the leaves the leaf keys represent (e.g. no indexes are populated in the receiving devices in association with the levels of the nodes the group keys represent or in association with the leaf level of the leaves the leaf keys represent). Each second cryptogram is encapsulated in a respective key block further comprising the level of the node represented by the first new group key used to encrypt the second cryptogram. The one (or more) first cryptogram is encapsulated in a key block further comprising the leaf level of the leaf key used to encrypt the first cryptogram. For instance, a receiving device receiving such key block has the knowledge of only the level of the node of the key to be used during step S510c for deciphering the received cryptogram. It means in particular that different receiving devices having a new group key associated to that indicated level will try to decipher the received cryptogram using that particular new group key.

As discussed above in relation with figure 3, in some of those embodiments each cryptogram comprises a control value of the first new group key. Thus, even when no index is provided in the respective key block, the receiving device can know if the new group key carried by the second cryptogram is intended for it by comparison of the control value with a predetermined expected value during step S5 10c.

For instance, such control value is a constant value associated to the first new group key or the result of a cyclic redundancy check (CRC) scheme applied to the first new group key.

In some embodiments, the second cryptograms comprising a new root key also comprise an information representative of which root key to update among different root keys populated in the receiving devices (see embodiments discussed above in relation with Figures 1-4, e.g. the example of Table 2 with the root key index 0 and the root key index 1).

In some embodiments, the second cryptograms comprise at least one second cryptogram comprising a second new group key different than the first new group key. The second cryptogram is encrypted by a second new group key representing a node of level following the other level in the sequences of nodes of the revoked path. In some of those embodiments, the at least one first cryptogram comprises a first cryptogram comprising a second new group key different than the first new group key, the first cryptogram being encrypted by the leaf key of the revoked receiving device.

Thus, the revoked receiving device is populated with second new group keys different than the first new group keys. The result is that the revoked receiving device is now on a dedicated new branch of the hierarchical tree, i.e. excluded from the original hierarchical tree (see embodiments discussed above in relation with Figure 4). Having that the same mechanism is used whether for the simple update of the key in the context of revocation, or for pushing the revoked receiving device on a dedicated new branch of the hierarchical tree, further makes the proposed solution hard to detect and understand for a hacker. This strengthens the resilience of the solution in respect of hackers.

In some of those embodiments, at least one of the second cryptograms comprises data that has not been encrypted using one of the first new group keys or the second new group key. this is e.g. dummy data discussed above in relation with figure 4. Thus, fake second cryptograms are broadcasted, e.g. for having the revoked receiving device to see a same number of second cryptogram as if it was a normal group key update that takes place whereas a pushing the revoked receiving device on a dedicated new branch of the hierarchical tree occurs. This further makes the proposed solution hard to detect and understand for a hacker. This strengthens the resilience of the solution in respect of hackers.

Back to figure 5, during an **accession phase P520,** at least one receiving device executes a **step S520a** wherein it uses the root key to directly or indirectly access to the conditional access data.

However, this depends on a receiving device's user usage. Thus, it may be that the accession phase P520 and more particularly the step S520a is not executed by a considered receiving device.

Referring now to **Figure 6****,** in order to be able to implement the corresponding steps of the method to revoke a receiving device among a group of receiving devices having access to conditional access data in the various embodiments disclosed above in relationship with

Figure 5, the receiving devices R1-R8 comprise a first electronic device 100d. In some embodiments such first electronic device 100d comprises:
- a non-volatile memory (NVM) 603 (e.g. a read-only memory (ROM), a hard disk, a flash memory, etc.);
- a volatile memory 601 (e.g. a random-access memory or RAM) and a processor 602.

The non-volatile memory 603 is a non-transitory computer-readable carrier medium. It stores executable program code instructions, which are executed by the processor 602 in order to enable implementation of some steps of the method described above (method to revoke a receiving device among a group of receiving devices having access to conditional access data) in the various embodiments disclosed above in relationship with Figure 5.

Upon initialization, the aforementioned program code instructions are transferred from the non-volatile memory 603 to the volatile memory 601 so as to be executed by the processor 602. The volatile memory 601 likewise includes registers for storing the variables and parameters required for this execution.

The steps of the method to revoke a receiving device among a group of receiving devices having access to conditional access data may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 7****,** in order to be able to implement the corresponding steps of the method to revoke a receiving device among a group of receiving devices having access to conditional access data in the various embodiments disclosed above in relationship with Figure 5, the management center 110 comprises a second electronic device 110d. In some embodiments the second electronic device 110d comprises:
- a non-volatile memory (NVM) 703 (e.g. a read-only memory (ROM), a hard disk, a flash memory, etc.);
- a volatile memory 701 (e.g. a random-access memory or RAM) and a processor 702. The non-volatile memory 703 is a non-transitory computer-readable carrier medium. It stores executable program code instructions, which are executed by the processor 702 in order to enable implementation of some steps of the method described above (method for securing access to a user account at a content provider system) in the various embodiments disclosed above in relationship with Figure 5.

Upon initialization, the aforementioned program code instructions are transferred from the non-volatile memory 703 to the volatile memory 701 so as to be executed by the processor 702. The volatile memory 701 likewise includes registers for storing the variables and parameters required for this execution.

The steps of the method for securing access to a user account at a content provider system may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method to revoke a receiving device among a group of receiving devices (R1-R8) having access to conditional access data, said group being organized in a hierarchical tree structure starting by a root, represented by a root key (KO, KO', KO"), down to the leaves associated to the receiving devices, a leaf being represented by a leaf key (K3.1-K3.8) which is unique to the receiving device associated to the leaf, a path starting from the root and terminating by a leaf having multiple nodes defining an ordered sequence of nodes having a level in the sequence, a node the closest to the root being a node of lower level in the sequence, the node the closest to the leaf being the node of higher level in the sequence, each node defining a respective group of receiving devices having a hierarchical tree structure starting by the node, the node being represented by a group key,
wherein, each receiving device of the group is populated with the root key, the group keys representing the nodes pertaining to the path starting from the root down to the leaf associated to the receiving device, and a leaf key which is unique to the receiving device,
wherein, for at least one receiving device to be revoked, hereafter revoked receiving device (R3), the method comprises a revocation phase (P510) comprising:
- sending (S510a), to the receiving devices, at least one first cryptogram comprising a first new group key associated to a node of highest level along the path starting from the root and terminating by a leaf associated to the revoked receiving device, hereafter revoked path, the at least one first cryptogram being encrypted by a respective leaf key of a receiving device member of a first group the revoked receiving device is member of, the first group being defined by the node of highest level along the revoked path; and
- sending (S510b), to the receiving devices, a plurality of second cryptograms comprising a first new group key associated to another node of another level along the revoked path different than the node of highest level, each second cryptogram being encrypted by a first new group key representing a node of level following the other level in the sequences of nodes of a path starting from the root down to a leaf associated to a receiving devices member of a second group the revoked receiving device is member of, the second group being defined by the other node, said sending a plurality of second cryptograms being repeated to cover all nodes along the revoked path starting from the node of highest level along the revoked path up to the root.

2. Method according to claim 1, wherein the nodes of same level in the different paths starting by the root down to the leaves associated to the different receiving devices are indexed, the leaves having a leaf level following the higher level in the respective sequence, the leaves of same leaf level being indexed,
wherein the group keys are populated in the receiving devices in association with both the level of the node they represent and their index, the leaves keys being populated in the receiving devices in association with both the leaf level and the index of the leaves they represent,
and wherein each second cryptogram is encapsulated in a block of data further comprising both the level of the node represented by the first new group key used to encrypt the second cryptogram, and the index of the first new group key used to encrypt the second cryptogram, the at least one first cryptogram being encapsulated in a block of data further comprising both the leaf level and the index of the leaf key used to encrypt the first cryptogram.

3. Method according to claim 1, wherein the group keys are populated in the receiving devices in association with the levels of the nodes they represent,
wherein, the leaves having a leaf level following the higher level in the respective sequence, the leaves keys are populated in the receiving devices in association with the leaf level of the leaves they represent,
and wherein each second cryptogram is encapsulated in a block of data further comprising the level of the node represented by the first new group key used to encrypt the second cryptogram, the at least one first cryptogram being encapsulated in a block of data further comprising the leaf level of the leaf key used to encrypt the first cryptogram.

4. Method according to claim 3, wherein each cryptogram comprises a control value of the first new group key.

5. Method according to any of the claims 1 to 4, wherein said second cryptograms comprise at least one second cryptogram comprising a second new group key different than the first new group key, the second cryptogram being encrypted by a second new group key representing a node of level following the other level in the sequences of nodes of the revoked path and/or wherein said at least one first cryptogram comprises a first cryptogram comprising a second new group key different than the first new group key, the first cryptogram being encrypted by the leaf key of the revoked receiving device.

6. Method according to claim 5, wherein at least one of the second cryptograms comprises data that has not been encrypted using one of the first new group keys or the second new group key.

7. Method to revoke a receiving device among a group of receiving devices (R1-R8) having access to conditional access data, said group being organized in a hierarchical tree structure starting by a root, represented by a root key (KO, KO', KO"), down to the leaves associated to the receiving devices, a leaf being represented by a leaf key (K3.1-K3.8) which is unique to the receiving device associated to the leaf, a path starting from the root and terminating by a leaf having multiple nodes defining an ordered sequence of nodes having a level in the sequence, a node the closest to the root being a node of lower level in the sequence, the node the closest to the leaf being the node of higher level in the sequence, each node defining a respective group of receiving devices having a hierarchical tree structure starting by the node, the node being represented by a group key,
wherein, each receiving device of the group is populated with the root key, the group keys representing the nodes pertaining to the path starting from the root down to the leaf associated to the receiving device, and a leaf key which is unique to the receiving device,
wherein, for at least one receiving device to be revoked, hereafter revoked receiving device (R3), the method comprises a revocation phase (P510) comprising:
- receiving (S5 10a), by a receiving device, at least one first cryptogram comprising a first new group key associated to a node of highest level along the path starting from the root and terminating by a leaf associated to the revoked receiving device, hereafter revoked path, the at least one first cryptogram being encrypted by a respective leaf key of a receiving device member of a first group the revoked receiving device is member of, the first group being defined by the node of highest level along the revoked path; and
- receiving (S5 10b), by the receiving device, a plurality of second cryptograms comprising a first new group key associated to another node of another level along the revoked path different than the node of highest level, each second cryptogram being encrypted by a first new group key representing a node of level following the other level in the sequences of nodes of a path starting from the root down to a leaf associated to a receiving devices member of a second group the revoked receiving device is member of, the second group being defined by the other node, said receiving a plurality of second cryptograms being repeated to cover all nodes along the revoked path starting from the node of highest level along the revoked path up to the root.

8. Method according to claim 7, wherein the revocation phase further comprises obtaining (S510c):
- the first new group key associated to the node of highest level along the revoked path by deciphering a first cryptogram using the leaf key of the receiving device; and/or
- at least one first new group key associated to another node of another level along the revoked path different than the node of highest level by deciphering a second cryptogram using the first new group key representing a node of level following the other level in the sequence of nodes of the path starting from the root down to a leaf associated to the receiving device.

9. Method according to claim 7 or 8, wherein the group keys are populated in the receiving devices in association with the levels of the nodes they represent,
wherein, the leaves having a leaf level following the higher level in the respective sequence, the leaves keys are populated in the receiving devices in association with the leaf level of the leaves they represent,
and wherein each second cryptogram is encapsulated in a block of data further comprising the level of the node represented by the first group key used to encrypt the second cryptogram, the at least one first cryptogram being encapsulated in a block of data further comprising the leaf level of the leaf key used to encrypt the first cryptogram.

10. Method according to claim 9 in that it depends on claim 8, wherein each cryptogram comprises a control value of the first new group key,
wherein said obtaining (S510c) further comprises, for at least one first new group key, obtaining the control value of the first new group key,
and wherein said obtaining (S510c) further comprises comparing the obtained control value with a respective predetermined expected value.

11. Method according to any of the claims 7 to 10, wherein said second cryptograms comprise at least one second cryptogram comprising a second new group key different than the first new group key, the second cryptogram being encrypted by a second new group key representing a node of level following the other level in the sequences of nodes of the revoked path.

12. Method according to claim 11, wherein at least one of the second cryptograms comprises data that has not been encrypted using one of the first new group keys or the second new group key.

13. Computer program product comprising instructions which, when the program is executed by at least one processor, lead it to implement the steps of the method according to any one of claims 1 to 12.

14. Electronic device (110d) comprising at least one processor or at least one field-programmable gate array or at least one dedicated computing machine configured for carrying out the steps of the method of any of the claims 1 to 6.

15. Electronic device (100d) comprising at least one processor or at least one field-programmable gate array or at least one dedicated computing machine configured for carrying out the steps of the method of any of the claims 7 to 12.
